**Europäisches Patentamt**

**European Patent Office**

**Office européen des brevets**

(11) Veröffentlichungsnummer: **0 289 836 B1**

# EUROPÄISCHE PATENTSCHRIFT

(45) Veröffentlichungstag der Patentschrift: **06.11.91**

(51) Int. Cl.⁵: **G05B 19/403**

(21) Anmeldenummer: **88106078.4**

(22) Anmeldetag: **15.04.88**

(54) Verfahren zur Positionierung eines Werkzeugs eines mehrgelenkigen Roboters.

(30) Priorität: **04.05.87 DE 3714806**

(43) Veröffentlichungstag der Anmeldung:
**09.11.88 Patentblatt 88/45**

(45) Bekanntmachung des Hinweises auf die
Patenterteilung:
**06.11.91 Patentblatt 91/45**

(84) Benannte Vertragsstaaten:
**CH DE FR GB IT LI SE**

(56) Entgegenhaltungen:

PROCEEDINGS 1987 IEEE INTERNATIONAL CONFERENCE ON ROBOTICS AND AUTOMATION, Raleigh, North Carolina, 31. März - 3. April 1987, Band 3, Seiten 1842-1848, IEEE, New York, US; C. CHEVALLEREAU et al.: "Efficient method for the calculation of the pseudo inverse kinematic problem"

PROCEEDINGS 1986 IEEE INTERNATIONAL CONFERENCE ON ROBOTICS AND AUTOMATION, San Francisco, 7.-10. April 1986, Band 2, Seiten 1011-1016, IEEE, New York, US; J. CHEN et al.: "Positioning error analysis for robot manipulators with all rotary joints"

PATENT ABSTRACTS OF JAPAN, Band 10, Nr. 380 (P-528)[2437], 19. Dezember 1986; & JP-A-61 169 905 (HITACHI LTD) 31-07-1986

(73) Patentinhaber: **SIEMENS AKTIENGESELL-SCHAFT**
**Wittelsbacherplatz 2**
**W-8000 München 2(DE)**

(72) Erfinder: **Stelzer, Jörg, Dr.**
**Österreicher-Strasse 40**
**W-8520 Erlangen(DE)**

EP 0 289 836 B1

## Beschreibung

Die Erfindung bezieht sich auf ein Verfahren zur Positionierung eines Werkzeugs eines mehrgelenkigen Roboters, wobei die Position, d.h. der Ort und die Orientierung des Werkzeugs in einem Bezugskoordinatensystem angegeben ist und wobei die jeweilige Position des Werkzeugs gegenüber dem Bezugskoordinatensystem und die Winkelstellungen der Robotergelenkachsen durch ein Koordinatentransformations-Gleichungssystem verknüpft sind, dessen Parameter durch die Soll-Abstände und Soll-Richtungen der Robotergelenke bestimmt sind. Dabei steht das Wort "Werkzeug" stellvertretend für alle Vorrichtungen, die als Handteil für einen Roboter in Frage kommen können.

Für die Positionierung eines Werkzeugs bei mehrgelenkigen Robotern sind relativ komplexe Koordinatentransformations-Gleichungssysteme zu berücksichtigen. Dabei wird aus den jeweiligen Winkelstellungen der Robotergelenke und aus den Parametern, welche die Geometrie des Roboters beschreiben - wie beispielsweise die Abstände und Richtungen der Gelenkachsen -, die jeweilige Position des Werkzeugs berechnet. Die Position des Werkzeugs, die seinen Ort und seine Orientierung angibt, wird dabei auf ein Koordinatensystem bezogen, dessen Ursprung gewöhnlich im Fußpunkt des Roboters liegt. Umgekehrt lassen sich, um das Werkzeug auf eine bestimmte Position zu bringen, die entsprechenden Winkelstellungen für die Robotergelenke berechnen, wenn eine bestimmte Position bezüglich des Bezugskoordinatensystems und die Geometrie-Parameter vorgegeben werden.

Ein entsprechendes Verfahren der eingangs genannten Art ist beispielsweise aus Paul, R.B., "Robot Manipulators", Kapitel 2, S.41 ff., The MIT Press, Cambridge (Mass.) and London (GB), 1981 bekannt.

Da die jeweilige Robotergeometrie in der Praxis jedoch nicht ideal ist - beispielsweise können die einzelnen Gelenkachsen Fehlerwinkel zueinander aufweisen (Ist-Richtungen) und/oder die Gelenkabstände sind durch Fertigungstoleranzen von den Soll-Abständen verschieden (Ist-Abstände) - kommt es infolgedessen zu Fehlern bei der Positionierung des Werkzeugs. Die Vermeidung dieser Fehler durch Modifikation der entsprechenden Parameter in den Koordinatentransformations-Gleichungssystemen würde eine äußerst aufwendige numerische Koordinatentransformation erfordern.

Aufgabe der Erfindung ist es, bei einem Verfahren der eingangs genannten Art einen durch die tatsächliche Robotergeometrie, d.h. durch die Ist-Abstände und Ist-Richtungen der Gelenke, gegenüber der idealen Robotergeometrie mit den Soll-Abständen und Soll-Richtungen der Gelenke bedingten Positionierungsfehler zu erfassen und zu kompensieren, so daß die Positioniergenauigkeit von Robotern verbessert wird.

Gemäß der Erfindung wird diese Aufgabe durch die folgenden Verfahrensschritte gelöst:

a) In einem ersten Schritt werden ausgehend von den Soll-Abständen und den Soll-Richtungen der Gelenkachsen die jeweiligen Winkelstellungen der Gelenke für die jeweils vorgegebene räumliche Position des Werkzeugs als vorläufige Werte ermittelt,

b) in einem zweiten Schritt wird der durch die Differernz der Soll-Abstände und Soll-Richtungen zu den Ist-Abständen und Ist-Richtungen der Gelenke bedingte Positiontierungsfehler des Werkzeugs mittels Fehlerrechnung bestimmt,

c) in einem dritten Schritt wird der ermittelte Positionierungsfehler mit Hilfe der aus dem Koordinatentransformations-Gleichungssystem angebbaren inversen Jacobi-Matrix in entsprechende Korrekturwerte für die Winkelstellungen der Gelenke transformiert,

d) in einem vierten Schritt werden die fehlerkorrigierten Winkelstellungen für die Gelenke aus den im ersten Schritt ermittelten vorläufigen Werten und aus den im dritten Schritt bestimmten Winkelkorrekturwerten durch Addition berechnet.

Der Vorteil des Verfahrens besteht darin, daß die Fehlerkompensation in relativ einfacher Weise auf analytischem Weg durchgeführt werden kann.

Ein Ausführungsbeispiel der Erfindung ist in der Zeichnung dargestellt und wird im folgenden näher erläutert. Dabei zeigen:

FIG 1 einen Roboterarm mit drei Gelenken,

FIG 2 einen Werkzeugträger,

FIG 3 ein Flußdiagramm.

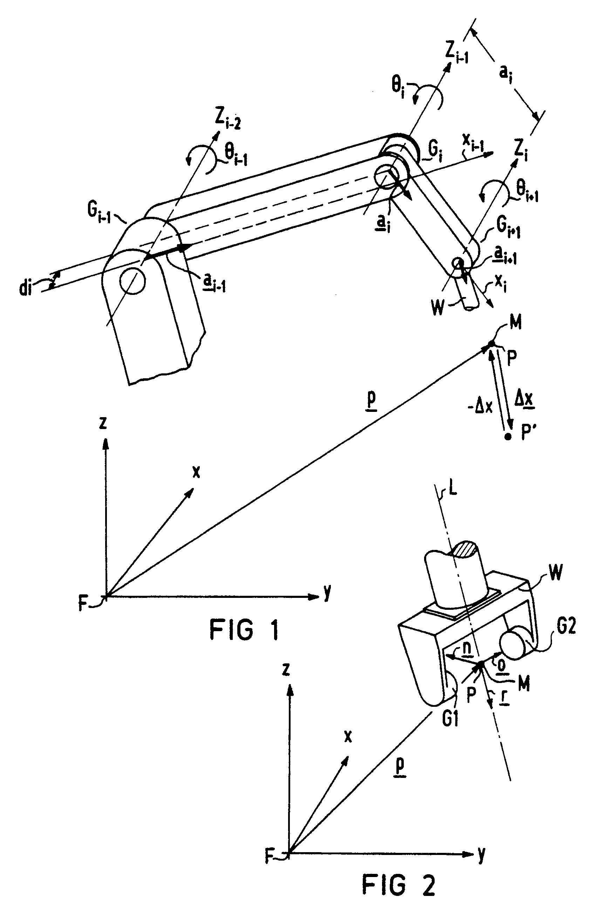

In FIG 1 ist von einem n-achsigen Roboter ein Roboterarmabschnitt mit drei rotatorischen Gelenken $G_{i-1}$, $G_i$ und $G_{i+1}$ dargestellt. Jedem der Gelenke ist ein eigenes kartesisches Koordinatensystem zugeordnet, wobei der Index des jeweiligen Koordinatensystems um 1 geringer ist als der des jeweiligen Gelenks $G_{i-1}$, $G_i$, $G_{i+1}$. Die jeweilige z-Achse $Z_{i-2}$, $Z_{i-1}$, $Z_i$ fällt mit der Drehachse des jeweiligen Gelenks $G_{i-1}$, $G_i$, $G_{i+1}$ zusammen.

Ein jedem der Gelenke $G_{i-1}$, $G_i$, $G_{i+1}$ zugeordneter Normalenvektor $a_{i-1}$, $a_i$, $a_{i+1}$ liegt im Mittelpunkt des jeweiligen Gelenks $G_{i-1}$, $G_i$, $G_{i+1}$ und zeigt in Richtung des jeweils nächsten Gelenks. Beispielsweise zeigt

2

der Normalenvektor $a_{i-1}$ in Richtung des Gelenks $G_i$, der Normalenvektor $a_i$ in Richtung des Gelenks $G_{i+1}$.

Die jeweilige x-Achse $x_{i-1}$, $x_i$, liegt in der Verlängerung des jeweiligen Normalenvektors $a_{i-1}$, $a_i$, so daß sie jeweils parallel zum am Gelenk $G_{i-1}$, $G_i$, befestigten Glied des Roboterarms verläuft, wenn dieser die kürzeste Verbindung zum jeweils nächsten Gelenk darstellt. Die $x_{i-2}$ Achse die dem Gelenk $G_{i-1}$ zugeordnet ist, ist nicht eingezeichnet, da ihre Richtung vom Normalenvektor $a_{i-2}$ des nicht dargestellter Gelenks $G_{i-2}$ abhängt und deshalb nicht bestimmbar ist. Die y-Achsen tragen zum Verständnis nicht bei und sind der Übersichtlichkeit halber nicht dargestellt. Am Gelenk $G_{i+1}$ ist als Handteil des Roboterarms ein Werkzeug W befestigt, das im Zusammenhang mit FIG 2 vollständig dargestellt ist und auf das später noch eingegangen wird. Dort ist auch zu erkennen, daß der Mittelpunkt M des Werkzeugs W mit einem eingezeichneten Punkt P (FIG 1,FIG 2) zusammenfällt.

Ferner ist in FIG 1 ein kartesisches Koordinatensystem als Bezugskoordinatensystem dargestellt. Es liegt mit seinem Ursprung (x, y, z) = (0, 0, 0) im konstruktiv im einzelnen nicht gezeigten Fußpunkt F des Roboters. Es könnte sich aber auch an einer beliebigen anderen Stelle des Raumes befinden. Der Mittelpunkt M des nicht vollständig dargestellten Werkzeugs W, der bei der gezeigten Position des Roboterarms mit dem Punkt P zusammenfällt, läßt sich durch einen Ortsvektor p fußpunktbezogen beschreiben. Bevor auf die übrigen Elemente der FIG 1 eingegangen wird, wird im Zusammenhang mit FIG 2 die Positionierung des Werkzeug W beschrieben.

FIG 2 zeigt eine perspektivische Darstellung des Werkzeugs W. Die Positionierung nach Ort und Orientierung des Werkzeugs W bezüglich des bereits aus FIG 1 bekannten Bezugskoordinatensystems im Fußpunkt F des Roboters wird beschrieben durch ein dem Werkzeug W zugeordnetes, kartesisches Koordinatensystem mit den Einheitsvektoren n, o und r, die in dieser Reihenfolge ein Rechtssystem bilden. Der Ursprung dieses Koordinatensystems liegt im Mittelpunkt M des Werkzeugs W. Der Vektor r liegt in der Längsachse L (gestrichelt angedeutet) und zeigt in die Richtung, in welcher das Werkzeug W auf einen Gegenstand, z.B. auf ein Werkstück zugreifen kann. Der Vektor o zeigt von der Greiffläche G1 zur Greiffläche G2. Der Vektor n steht senkrecht auf den Vektoren r und o. Bezüglich des Koordinatensystems im Fußpunkt F des Roboters besitzen die Vektoren n, o und r jeweils Komponenten in x, y und z Richtung, die im folgenden mit $n_x$, $n_y$, $n_z$ mit $o_x$, $o_y$, $o_z$ und mit $r_x$, $r_y$, $r_z$ bezeichnet werden. Diese Komponenten sind der Übersichtlichkeit halber nicht eingezeichnet, auf sie wird jedoch später für die Erklärung einer Transformationsmatrix noch zurückgegriffen. Nach dieser Darlegung wird auf FIG 1 Bezug genommen.

Werden an den rotatorischen Gelenken $G_{i-1}$, $G_i$, $G_{i+1}$ bestimmte Winkel $\theta_{i-1}$, $\theta_i$, $\theta_{i+1}$ eingestellt, so wird der Mittelpunkt M des Werkzeugträgers W auf einen bestimmten Raumpunkt positioniert. Der Ort des Mittelpunktes M und die Orientierung des Werkzeugträgers W ist dabei zusätzlich zu den Winkeln $\theta_{i-1}$, $\theta_i$, $\theta_{i+1}$ noch von den geometrischen Parametern des Roboterarms abhängig, die im folgenden noch erklärt werden. Für ein rotatorisches Gelenk, z.B. für das Gelenk $G_{i-1}$ , lassen sich nach der Denavit-Hartenberg-Konvention die Parameter wie folgt festlegen:

$a_i$:     Länge der gemeinsamen Normalen zwischen der Achse des i-ten und der Achse des (i + 1)-ten Gelenks

$d_i$:     Abstand zwischen den Geraden durch die Normalenvektoren $a_i$ und $a_{i-1}$

$\alpha_i$:     Winkel zwischen der (i + 1)-ten und der i-ten Gelenkachse.

Die Abstände $a_i$ und $d_i$ sind in FIG 1 eingezeichnet. Der Winkel $\alpha_i$ ist in der Darstellung gemäß FIG 1 nicht eingezeichnet, da er im Ausführungsbeispiel gleich Null ist. Er wird größer Null, wenn die Gelenkachse des (i + 1)-ten Gelenks in der $y_i$, $z_i$ Ebene gegenüber der Gelenkachse des i-ten Gelenks gegen den Uhrzeigersinn verdreht wird, wie dies bei sonst parallelen Gelenken beispielsweise durch Fertigungstoleranzen bedingt sein kann.

Im gezeigten Fall sind nur die Winkel $\theta_{i-1}$, $\theta_i$, $\theta_{i+1}$ variabel. Ihre Zählung ist beispielsweise für das Gelenk $G_i$:

$\theta_i$:     Winkel zwischen den Normalenvektoren $a_{i-1}$ und $a_i$.

Die Zählrichtung ist in FIG 1 jeweils durch einen die Drehachse umschlingenden Pfeil angedeutet.

Die Parametrierung wäre bei translatorischen Gelenken, die im Ausführungsbeispiel nicht vorgesehen sind, abweichend, wobei das im folgenden beschriebenen Verfahren jedoch prinzipiell gleichartig angewendet werden würde.

Mit den eingeführten Parametern läßt sich für jedes Gelenk $G_{i-1}$, $G_i$, $G_{i+1}$ eine 4-zeilige und 4-spaltige Gelenkmatrix aufstellen, die zur besseren Vorstellung für das Gelenk $G_i$ explizit angegeben sei.

$$A_i = \begin{pmatrix} \cos\theta_i & -\sin\theta_i\cdot\cos\alpha_i & \sin\theta_i\cdot\sin\alpha_i & a_i\cdot\cos\theta_i \\ \sin\theta_i & \cos\theta_i\cdot\cos\alpha_i & -\cos\theta_i\cdot\sin\alpha_i & a_i\cdot\sin\theta_i \\ 0 & \sin\alpha_i & \cos\alpha_i & d_i \\ 0 & 0 & 0 & 1 \end{pmatrix} \quad (1)$$

Die Multiplikation aller Gelenkmatrizen eines Roboters ergibt eine Transformationsmatrix, die sich als ein Vektor x interpretieren läßt, der die Position (Ort und Orientierung) des Werkzeugträgers W bezogen auf den Fußpunkt F beinhaltet. Diese Transformationsmatrix hat folgende allgemeine Form:

$$\underline{x} = \begin{pmatrix} n_x & o_x & r_x & p_x \\ n_y & o_y & r_y & p_y \\ n_z & o_z & r_z & p_z \\ 0 & 0 & 0 & 1 \end{pmatrix} \quad (2)$$

Die Elemente $n_x$, $n_y$, $n_z$, $o_x$, $o_y$, $o_z$ und $r_x$, $r_y$, $r_z$ des Vektors x geben die Orientierung des Werkzeugs W, wie unter FIG 2 beschrieben, an. Die Elemente $p_x$, $p_y$, $p_z$ sind die Komponenten des fußpunktbezogenen Vektors p in x-, y- und z-Richtung, der den Ort des Mittelpunkts M des Werkzeugs W beschreibt. Aus der Multiplikation aller n Gelenkmatrizen (...$A_{i-1}$, $A_i$, $A_{i+1}$...) ist ersichtlich, daß sich die Matrixelemente aus Funktionen der Winkel ...$\theta_{i-1}$, $\theta_i$, $\theta_{i+1}$... und aus den Parametern ...$a_{i-1}$, $a_i$, $a_{i+1}$..., ...$d_{i-1}$, $d_i$, $d_{i+1}$..., ...$\alpha_{i-1}$, $\alpha_i$, $\alpha_{i+1}$... ergeben. Faßt man alle, den Roboter beschreibenden Parameter unter einem Vektor $\underline{\phi}$ zusammen und die Winkelstellungen aller Robotergelenke unter dem Vektor

$$\underline{\theta} = \begin{pmatrix} \vdots \\ \theta_{i-1} \\ \theta_i \\ \theta_{i+1} \\ \vdots \end{pmatrix}, \quad (3)$$

so läßt sich der Vektor x ganz allgemein als eine Funktion von $\phi$ und $\theta$ beschreiben, aus der sich bei bekannten Parametern und bekannten Winkelstellungen die Position des Werkzeugs W bestimmen lassen. Die mathematische Beschreibung dafür ist:

$$\underline{x} = F(\underline{\theta}, \underline{\phi}) \quad (4)$$

Aus dieser Funktion läßt sich eine Umkehrfunktion

$$\underline{\theta} = G(\underline{x}, \underline{\phi}) \quad (5)$$

bilden, aus der für eine vorgegebene Position des Werkzeugs W (Vektor x) und aus den im Vektor $\phi$ zusammengefaßten Parametern die Winkelstellungen der jeweiligen Robotergelenke ...$\theta_{i-1}$, $\theta_i$, $\theta_{i+1}$..., die durch den Vektor $\theta$ beschrieben werden, berechnet werden können.

Die Parameter ...$a_{i-1}$, $a_i$, $a_{i+1}$..., ...$d_{i-1}$, $d_i$, $d_{i+1}$..., ...$\alpha_{i-1}$, $\alpha_i$, $\alpha_{i+1}$... beziehen sich dabei auf die ideale Robotergeometrie, insbesondere darauf, daß die Glieder, welche die Gelenke verbinden, ideal gerade sind und daß die Ebenen, in der die Achsen liegen, zueinander parallel sind. Dies ist jedoch in der Praxis nicht immer gewährleistet. Bei geringfügigen Abweichungen von der idealen Geometrie, die beispielsweise durch Fertigungstoleranzen verursacht sein können, kommt es dann zu einer Fehlpositionierung (falscher Ort und Fehlorientierung) des Werkzeugs W, die durch einen Vektor $\Delta x$ (FIG 1) ausgedrückt werden kann. Die Kompensation dieses Fehlers bei der Positionierung eines Roboterwerkzeugs ist Gegenstand der Erfindung.

Um das Werkzeug W des Roboters gemäß FIG 1 auf den Punkt P, der vom Fußpunkt F (oder von einem anderen im Raum befindlichen Bezugssystem) durch den Vektor p beschrieben ist, zu positionieren, werden nach Gleichung 2 die Winkelstellungen $\theta$ für die Gelenke ...$G_{i-1}$, $G_i$, $G_{i+1}$... des Roboterarms berechnet. Bedingt durch die nicht idealen Geometrieverhältnisse des Roboters, d.h. durch die Ist-Abstände und Ist-Richtungen der Gelenke, würde sich das Werkzeug W wenn die berechneten Winkel eingestellt würden, aber an einem Punkt P' befinden. Die Entfernung dieses Punktes P' vom angestrebten Punkt P und die von der Soll-Orientierung abweichende Orientierung des Werkzeugs W am Punkt P' zum Punkt P ist durch den Vektor $\Delta x$ gekennzeichnet. Die Position des Werkzeugs W muß deshalb um den Vektor $-\Delta x$ korrigiert werden, damit der bezüglich seiner Geometrie nicht ideale Roboter in angestrebter Weise den Punkt P erreicht.

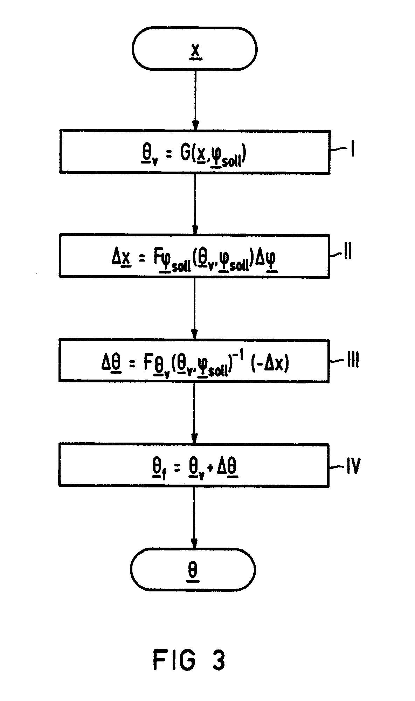

In der Darstellung gemäß FIG 3 ist in einem Flußdiagramm, das den Ablauf des Positioniervorgangs, in einer dem Roboter zugeordneten Datenverarbeitungsanlage (der Übersichtlichkeit halber nicht dargestellt) schematisiert, das Prinzip der Geometriefehlerkompensation veranschaulicht. Dabei wird in einem ersten Schritt I aus den für eine gewünschte Position des Werkzeugs W eingegebenen Koordinaten x und aus dem Soll-Parametervektor $\phi_{soll}$, dessen Elemente die idealen Geometrieverhältnisse, d.h. die Soll-Abstände und Soll-Richtungen der Gelenke des Roboters beschreiben und die innerhalb der Datenverarbeitungsanlage für den bestimmten Roboter fest vorgegeben sein können, ein Vektor $\theta_v$ für die vorläufigen (Index v weist hierauf hin) Achsstellungen entsprechend G1.5 bestimmt. In einem zweiten Schritt wird der Fehler $\Delta x$, der durch die Ist-Abstände und Ist-Lagen der Robotergelenke bezogen auf die ideale Geometrie des Roboters bewirkt ist, durch eine Fehlerrechnung bestimmt. Dazu wird ein Geometriefehler-Vektor $\Delta \phi$ der die Differenz der Soll-Parameter zu den Ist-Parametern beschreibt und der wie folgt bestimmt werden kann

$$\Delta \underline{\phi} = \underline{\phi}_{soll} - \underline{\phi}_{ist} , \qquad (6)$$

mit der partiellen Ableitung der Funktion G1.4 nach $\phi_{soll}$ multipliziert, so daß sich der Vektor $\Delta x$ ergibt aus:

$$\Delta \underline{x} = \frac{\partial F(\underline{\theta}_v, \underline{\phi}_{soll})}{\partial \underline{\phi}_{soll}} \Delta \underline{\phi} \qquad (7)$$

Im Flußdiagramm FIG 3 ist diese Beziehung durch die Schreibweise

$$\Delta \underline{x} = {}^F \underline{\phi}_{soll} (\underline{\theta}_v, \underline{\phi}_{soll}) \Delta \underline{\phi} \qquad (8)$$

in einem zweiten Schritt II angegeben (vgl. auch Bronstein, "Taschenbuch der Mathematik", Leipzig 1983,21.Aufl.,S.100). Den Vektor $\Delta \phi$ erhält man, indem man die Ist-Richtungen und Ist-Abstände der Robotergelenke ausmißt und die Differenz zu den Soll-Richtungen und Soll-Abständen bildet. Der nun berechnete Vektor $\Delta x$ beschreibt die durch die Ist-Abstände und Ist-Orientierung bedingte Abweichung der Werkzeugposition von der gewünschten Soll-Position (vgl. FIG.1). Zur Kompensation dieser Fehlpositionierung müssen die Winkelstellungen der Robotergelenke in bestimmter Weise geringfügig variiert werden. Dazu wird in einem dritten Verfahrensschritt III der Positionierungsfehler $\Delta x$ in differentielle Änderungen der vorläufigen Gelenkwinkelstellungen $\phi_v$, die durch einen Vektor $\Delta \theta$ beschrieben werden, überführt. Zur Bestimmung des Vektors $\Delta \theta$ sei folgendes vorausgeschickt.

Nimmt man zunächst an, die Fehlerpositionierung ergebe sich aus Fehlern der Gelenkwinkelstellungen, die durch den hypothetisch als bekannt vorausgesetzten Vektor $\Delta \theta$ beschrieben werden, so ließe sich analog zu G1.8 der Vektor $\Delta x$ bestimmen aus

$$\Delta \underline{x} = {}^{F}\underline{\theta}_{v} \, (\underline{\theta}_{v}, \, \underline{\psi}_{soll}) \Delta \underline{\theta} \quad , \tag{9}$$

wobei die Funktion

$${}^{F}\underline{\theta}_{v} \, (\underline{\theta}_{v}, \, \underline{\psi}_{soll})$$

die Jacobi-Matrix der Funktion F $(\theta_v, \phi_{soll})$ ist (Bronstein a.a.O. S.280). Multipliziert man G1.9 von links mit der inversen Jacobi-Matrix, die durch

$${}^{F}\underline{\theta}_{v} \, (\underline{\theta}_{v}, \, \underline{\psi}_{soll})^{-1}$$

beschrieben wird, so erhält man - bis auf das Minuszeichen - die im Schritt III beschriebene Formel. Das Minuszeichen ergibt sich dadurch, daß die Änderung der Gelenkwinkelstellungen für den zu $\Delta x$ antiparallelen Vektor berechnet werden müssen.

Die Jacobi-Matrix und ihre Inverse läßt sich in vorteilhafter Weise analytisch bestimmen. Die Methoden ihrer Bestimmung sind z.B. bei Paul, R.B. a.a.O., Kapitel 4, S.85 ff., besprochen.

In einem vierten Schritt IV wird dann aus den im ersten Schritt I berechneten vorläufigen Gelenkstellungen $\theta_v$ und den im dritten Schritt III berechneten Achswinkeländerungen $\Delta\theta$ der endgültige fehlerkompensierte Wert der Winkelstellungen $\theta_f = \theta_v + \Delta\theta$ berechnet und eingestellt. Der Index f weist auf die vorgenommene Fehlerkompensation hin.

## Patentansprüche

1. Verfahren zur Positionierung eines Werkzeugs (W) eines mehrgelenkigen Roboters, wobei die Position d.h. der Ort (P) und die Orientierung (r) des Werkzeugs (W) in einem Bezugskoordinatensystem (x,y,z) angegeben ist und wobei die jeweilige Position des Werkzeugs gegenüber dem Bezugskoordinatensystem (x,y,z) und die Winkelstellungen ($\theta_{i-1},\theta_i,\theta_{i+1}$) der Robotergelenkachsen durch ein Koordinatentransformations-Gleichungssystem verknüpft sind, dessen Parameter durch die Soll-Abstände ($a_{i-1}$, $a_i,a_{i+1}$; $d_{i-1},d_i,d_{i+1}$) und Soll-Richtungen der Robotergelenke ($G_{i-1},G_i,G_{i+1}$) bestimmt sind, mit folgenden Verfahrensschritten:

a) In einem ersten Schritt (I) werden ausgehend von den Soll-Abständen ($a_{i-1},a_i,a_{i+1}$, $d_{i-1},d_i,d_{i+1}$) und den Soll-Richtungen der Gelenkachsen die jeweiligen Winkelstellungen ($\theta_{i-1},\theta_i,\theta_{i+1}$) der Gelenke ($G_{i-1},G_i,G_{i+1}$) für die jeweils vorgegebene räumliche Position ($\underline{x}$) des Werkzeugs (W) als vorläufige Werte ($\theta_v$) ermittelt,

b) in einem zweiten Schritt (II) wird der durch die Differenz der Soll-Abstände ($a_{i-1},a_i,a_{i+1}$, $d_{i-1},d_i,d_{i+1}$) und Soll-Richtungen zu den Ist-Abständen und Ist-Richtungen der Gelenkachses der Gelenke ($G_{i-1},G_i,G_{i+1}$) bedingte Positionierungsfehler ($\Delta x$) des Werkzeug (W) mittels Fehlerrechnung bestimmt,

c) in einem dritten Schritt (III) wird der ermittelte Positionierungsfehler ($\Delta x$) mit Hilfe der aus dem Koordinatentransformations-Gleichungssystem angebbaren inversen Jacobi-Matrix in entsprechende Korrekturwerte ($\Delta\theta$) für die Winkelstellungen ($\theta_{i-1},\theta_i,\theta_{i+1}$) der Gelenke ($G_{i-1},G_i,G_{i+1}$) transformiert,

d) in einem vierten Schritt (IV) werden die fehlerkorrigierten Winkelstellungen ($\theta f$) für die Gelenke ($G_{i-1},G_i,G_{i+1}$) aus den im ersten Schritt (I) ermittelten vorläufigen Werten ($\theta_v$) und aus den im dritten Schritt (III) bestimmten Winkelkorrekturwerten ($\Delta\theta$) durch Addition berechnet.

## Claims

1. Method for positioning a tool (W) of a multi-joint robot, whereby the position i.e. the location (P) and the orientation (r) of the tool (W) is indicated in a reference coordinate system (x,y,z) and whereby the respective position of the tool relative to the reference coordinate system (x,y,z) and the angular positions ($\theta_{i-1},\theta_i,\theta_{i+1}$) of the robot joint axes are linked by a coordinate transformation set of equations, the parameters of which are determined by the desired distances ($a_{i-1},a_i,a_{i+1}$; $d_{i-1},d_i,d_{i+1}$) and desired

directions of the robot joints ($G_{i-1},G_i,G_{i+1}$), with the following procedural steps:

a) In a first step (I) proceeding from the desired distances ($a_{i-1},a_i,a_{i+1}$, $d_{i-1},d_i,d_{i+1}$) and the desired directions of the joint axes the respective angular positions ($\theta_{i-1},\theta_i,\theta_{i+1}$) of the joints ($G_{i-1},G_i,G_{i+1}$) for the respectively specified spatial position ($\underline{x}$) of the tool (W) are determined as temporary values ($\theta_v$),

b) in a second step (II) the positioning error ($\Delta \underline{x}$) of the tool (W), conditioned by the difference of the desired distances ($a_{i-1},a_i,a_{i+1}$, $d_{i-1},d_i,d_{i+1}$) and desired directions to the actual distances and actual directions of the joint axes of the joints ($G_{i-1},G_i,G_{i+1}$) is determined by means of error calculation,

c) in a third step (III) the determined positioning error ($\Delta \underline{x}$) is transformed with the aid of the inverse Jacobian matrix, which can be indicated from the coordinate transformation set of equations, into corresponding correction values ($\Delta \underline{\theta}$) for the angular positions ($\theta_{i-1},\theta_i,\theta_{i+1}$) of the joints ($G_{i-1},G_i,G_{i+1}$),

d) in a fourth step (IV) the error-corrected angular positions ($\theta_f$) for the joints ($G_{i-1},G_i,G_{i+1}$) are calculated by means of addition from the temporary values ($\theta_v$), determined in the first step (I), and from the angular correction values ($\Delta \underline{\theta}$), determined in the third step (III).

**Revendications**

1. Procédé pour positionner un outil (W) d'un robot à plusieurs articulations, selon lequel la position, c'est-à-dire l'emplacement ($\underline{P}$) et l'orientation ($\underline{r}$) de l'outil (W) sont indiquées dans un système de coordonnées de référence ($x$, $y$, $z$) et selon lequel la position respective de l'outil par rapport au système de coordonnées de référence ($x$, $y$, $z$) et les positions angulaires ($\theta_{i-1}$, $\theta_i$, $\theta_{i+1}$) des axes d'articulation des robots sont combinées au moyen d'un système d'équations de transformation de coordonnées, dont les paramètres sont déterminés par les distances de consigne ($a_{i-1}$, $a_i$, $a_{i+1}$; $d_{i-1}$, $d_i$, $d_{i+1}$) et des directions de consigne des articulations ($G_{i-1}$, $G_i$, $G_{i+1}$) du robot, comprenant les étapes opératoires suivantes :

a) lors d'un premier pas (I), les positions angulaires respectives ($\theta_{i-1}$, $\theta_i$, $\theta_{i+1}$) des articulations ($G_{i-1}$, $G_i$, $G_{i+1}$) sont déterminées en tant que valeurs préliminaires ($\theta_v$) pour la position spatiale respective prédéterminée ($\underline{x}$) de l'outil (W), à partir des distances de consigne ($a_{i-1},a_i$, $a_{i+1}$, $d_{i-1}$, $d_i$, $d_{i+1}$) et les directions de consigne des axes d'articulation,

b) lors d'un second pas (II), l'écart de positionnement ($\Delta x$) de l'outil (W), qui est dû à la différence entre les distances de consigne ($a_{i-1}$, $a_i$, $a_{i+1}$, $d_{i-1}$, $d_i$, $d_{i+1}$) et distances réelles et les directions de consigne et les distances réelles des axes d'articulation, est déterminée au moyen d'un calcul d'erreur,

c) lors d'un troisième pas (III), l'erreur déterminée de positionnement ($\Delta x$) est transformée, au moyen de la matrice de Jacobi inverse, devant être obtenue à partir du système d'équations de transformation de coordonnées, en des valeurs de correction correspondante ($\Delta \underline{\theta}$) pour les positions angulaires ($\theta_{i-1}$, $\theta_i$, $\theta_{i+1}$) des articulations ($G_{i-1}$, $G_i$, $G_{i+1}$),

d) lors d'un quatrième pas (IV), les positions angulaires ($\theta_f$), dont l'erreur a été corrigée, pour les articulations ($G_{i-1}$, $G_i$, $G_{i+1}$) sont calculées à partir des valeurs préliminaires ($\theta_v$), déterminées lors du premier pas (I), et des valeurs ($\Delta \underline{\theta}$) de correction angulaire déterminées lors du troisième pas (III).

FIG 1

FIG 2

$$\underline{X}$$

$$\underline{\theta}_v = G(\underline{x}, \underline{\psi}_{soll}) \quad \text{—I}$$

$$\Delta\underline{x} = F\underline{\psi}_{soll}(\underline{\theta}_v, \underline{\psi}_{soll})\Delta\underline{\psi} \quad \text{—II}$$

$$\Delta\underline{\theta} = F\underline{\theta}_v(\underline{\theta}_v, \underline{\psi}_{soll})^{-1}(-\Delta x) \quad \text{—III}$$

$$\underline{\theta}_f = \underline{\theta}_v + \Delta\underline{\theta} \quad \text{—IV}$$

$$\underline{\theta}$$

FIG 3